(19) **Europäisches Patentamt**
**European Patent Office**
**Office européen des brevets**

(11) **EP 1 524 750 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(51) Int Cl.:
*H01H 9/16* (2006.01)       *H02J 13/00* (2006.01)
*H05B 37/02* (2006.01)       *H04W 88/02* (2009.01)

(21) Anmeldenummer: **04022911.4**

(22) Anmeldetag: **27.09.2004**

(54) **Drahtloser Signalsender und -detektor**

Wireless signal transmitter and detector

Détecteur/transmetteur de signal sans fil

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.10.2003 DE 10349052**
**22.06.2004 DE 102004030183**

(43) Veröffentlichungstag der Anmeldung:
**20.04.2005 Patentblatt 2005/16**

(73) Patentinhaber: **permundo GmbH**
**40215 Düsseldorf (DE)**

(72) Erfinder: **Aumann, Gregor Maria Ernst Walter**
**40479 Düsseldorf (DE)**

(74) Vertreter: **Isfort, Olaf**
**Schneiders & Behrendt**
**Rechts- und Patentanwälte**
**Huestraße 23**
**44787 Bochum (DE)**

(56) Entgegenhaltungen:
**DE-U1- 29 712 270       GB-A- 2 210 187**
**US-A- 5 458 311**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen Signalsender und -detektor, vorzugsweise einen solchen für Lichtschalter oder ähnliche im Haushalt anzutreffende elektrische Schalter oder Taster, wie etwa Rolladenschalter, Lüftungsschalter oder Klingeltaster.

Die meisten Wohnungen sind mit festen Anschlußstellen für elektrische Verbraucher, wie etwa Beleuchtungskörper ausgestattet. Ebenso sind die dazugehörigen Schalter und die entsprechenden Steuerfunktionen (z.B. Wechselschalter oder Taster) festgelegt. Hat der Bewohner einer solchen Wohnung das Bedürfnis die z.B. vorgegebenen Deckenlampen durch Stehlampen zu ersetzen und möchte er diese über die vorhandenen Lichtschalter steuern, muß er die Installationsverdrahtung ändern. Dies ist aufwendig und teuer, d.h. die Wände müssen aufgestemmt werden, ein Handwerker wird benötigt etc..

Von dieser Situation ausgehend stellt sich daher das Problem der Änderung der Steuerverknüpfung, d.h. z.B. der Beziehung Schalter - Lampe, bestehender Schalter oder Taster ohne Notwendigkeit von Stemmarbeiten.

Zur Lösung dieses Problems sind eine Reihe technischer Lösungsansätze bekannt, bei denen die Steuerinformation drahtlos (z.B. über Funk) an einen drahtlosen Schalterempfänger übermittelt wird, welcher sich in der Zuleitung z.B. einer Lampe befindet.

So wird in der DE 297 12 270 U1 ein System vorgestellt, welches Schalter mit vorgerüstetem zusätzlichen Funkteil zeigt, jedoch ist hierzu festzustellen, daß für ein solches System seitens des Anmelders bislang kein Einsatz festgestellt werden konnte; jedenfalls ist ein solcher Einsatz - wenn überhaupt - wohl nicht in nennenswertem Umfang erfolgt. Vielmehr stellt sich die Situation in fast allen bestehenden Gebäuden, die zu Wohnzwecken erstellt worden sind so dar, daß dort rein mechanische Schalter vorzufinden sind, bei denen ein elektrischer Kontakt mechanisch durch eine Wippe betätigt wird.

Das in der DE 297 12 270 U1 vorgestellte System lässt sich funktionskompatibel beispielsweise aus Komponenten des von der Firma SIEMENS unter der eingetragenen Marke GAMMA wave angebotenen Funksystems erstellen, in dem man einen elektronischen Schaltereinsatz mit passender ‚Funktionsbedientaste-Beleuchtung' kombiniert. Ein solches System lässt sich zur nachträglichen Änderung der Steuerbeziehung jedoch nur dann sinnvoll einsetzen, wenn die Aufgabe besteht, über den gleichen Schalter z. B. eine zusätzliche Lampe zu steuern. Soll beispielsweise eine Deckenlampe durch eine Stehlampe ersetzt werden, wird der Fachmann kostengünstiger die Funkbedientaste ohne Schaltereinsatz einsetzen. Ein weiterer Nachteil dieses Systems besteht darin, dass zur Umrüstung, der vorhandene Schalter entfernt werden muss, was aufgrund der notwendigen Arbeiten an der 230V-Verkabelung einen Fachmann erfordert und nicht vom unkundigen Laien selbst durchgeführt werden kann. Ebenso passen die Komponenten des als Beispiel gewählten GAMMA wave Systems in Mechanik und Optik nicht zu dem eventuell an anderer Stelle schon montierten Schalterprogramm beispielsweise der Firma GIRA.

In jedem Falle verursacht aber ein System nach der Lehre der DE 297 12 270 U1 erhebliche vermeidbare Zusatzkosten, da hierbei ja in jedem Schalter vorgerüstete Funkbauelemente vorgehalten werden, die später dann zwar eine Änderung der Steuerbeziehungen erlauben, dies jedoch ohne, daß zunächst klar ist, ob die jeweiligen Funkbauelemente auch tatsächlich benötigt werden oder nicht. I.d.R bleiben somit die meisten dieser vorsorglich vorgesehenen Funksendelemente unbenutzt und verursachen somit nur Kosten, ohne jedoch einen technischen Nutzen zu erbringen.

Es bleibt somit - will man derart unnützen Kostenaufwand vermeiden - statt dieser präventiven Vorrüstung nur der Weg der Verwendung von Systemen zur Nachrüstung und Ergänzungsinstallation.

Ein solches System nach dem Stand der Technik zeichnet sich dadurch aus, daß der bereits bestehende Lichtschalter für seinen Einsatz umgebaut werden muß. Dieses System erlaubt es, die Optik der bereits vorhandenen Installation nicht zu verändern. Auch müssen keine Stemmarbeiten vorgenommen werden.

Der Umbau kann hierbei je nach Hersteller auf zwei Arten durchgeführt werden:

Bei einem Produkt der Firma INSTA (eingetragene Marke) (unter den eingetragenen Marken GIRA, BERKER oder JUNG vertrieben) nach dem Stand der Technik wird die bestehende 230 Volt Verdrahtung vom bestehenden Lichtschalter entfernt und dann die freigewordenen elektrischen Kontakte des Lichtschalters an einen hinter dem Schaltereinsatz in der Unterputzdose untergebrachten UP-Sender angeschlossen. Dieser tastet über die elektrischen Kontakte die Position des Schalters ab und sendet bei Betätigung des Schalters ein Funktelegramm an den drahtlosen Schaltempfänger, der bei den meisten Produkten nach diesem System als Zwischenstecker ausgeführt ist.

Ähnliche Produkte werden auch von der Firma MERTEN (eingetragene Marke), MOELLER (eingetragene Marke) und der Firma BUSCH-JÄGER (eingetragene Marke) angeboten.

Der Hauptnachteil dieser Produkte liegt jedoch darin begründet, daß sie der Installation durch den Fachmann (i.d.R. einen Elektriker) bedürfen und nicht vom unkundigen Laien allein nachzurüsten sind, da Arbeiten an der 230V-Verkabelung notwendig sind. Eine zusätzliche Schwierigkeit bei der Montage dieser Produkte liegt darin, dass fachliche Kenntnisse zur Auswahl des geeigneten UP-Sendemoduls erforderlich sind, da einige Module nur Taster bzw. nur Schalter unterstützen.

Bei einem weiteren Produkt nach dem Stand der Technik z.B. der Firma NIKO wird die bestehende 230 Volt Verdrahtung vom bestehenden Schalter entfernt. Danach wird der Schaltereinsatz aus der Unterputzdose genommen und durch einen mechanisch kompatiblen Block ersetzt, der einen Sender, anstatt des im Schalterseinsatz vorhandenen Leistungskontaktes, enthält.

Auch hier werden ähnliche Produkte von den Firmen INSTA, MERTEN, MOELLER und PEHA (eingetragene Marke) angeboten.

Auch diese Produkte erfordern aufgrund der Notwendigkeit zur Änderung der 230 Volt Verkabelung die Montage durch einen Fachmann. Zusätzlich sind die jeweiligen Sender, in mechanischer Ausführung und Optik, spezifisch an bestimmte Schalterprogramme des jeweiligen Herstellers angepasst. So hat man heute die Situation, dass derartige Produkte nur für einige auf dem Markt verfügbare Schalterprogramme einer begrenzten Anzahl von Schalterprogrammherstellern existieren und deswegen beispielsweise bei einem Umzug in eine andere Wohnung die Wiederverwendung des Produktes in der neuen Wohnung aufgrund der geringen Wahrscheinlichkeit dort das gleiche Schalterprogramm vorzufinden i.d.R. nicht möglich ist.

Allerdings gibt es nach dem Stand der Technik auch Nachrüstsysteme, die eine Montage durch Nicht-Fachleute, mithin also ohne Arbeiten an der Elektroanlage ermöglichen.

Derartige Systeme bestehen aus einem Wandsender in Lichtschalterform, der auf der Wandoberfläche angebracht wird und z.B. einem Lichtschalter ähnlich sieht, sowie dem jeweils dazugehörigen drahtlosen Schalterempfänger. Der Sender wird hierbei etwa ohne Stemm- oder Elektroinstallationsarbeiten direkt auf die Wand geklebt oder geschraubt, kann also von einem Nicht-Fachmann montiert werden. Ebenso kann der zugehörige drahtlose Schalterempfänger ohne die Hilfe eines Fachmanns montiert werden, da er als Zwischenstecker konstruiert ist.

Verfügbar ist dieses System z.B in einer weit verbreiteten Baumarktausführung zur Selbstmontage, welche sich durch einfache Konstruktion, relativ günstigen Preis, aber ein einheitlich gehaltenes, nicht an bestehende Schalterprogramme anpassbares Erscheinungsbild auszeichnet.

Hochwertigere Ausführungen dieser Lösung nach dem Stand der Technik werden von den Firmen INSTA, PEHA, NIKO, MOELLER, BUSCH-JAEGER und MERTEN (eingetragene Marken) angeboten und zeichnen sich durch eine an bestimmte Schalterprogramme des jeweiligen Herstellers angepasste Optik gegenüber der vorstehend angeführten Baumarktausführung aus. Auch bieten sie die Verfügbarkeit von weiteren Komponenten mit Spezialfunktionen im Rahmen eines Komponentensystems (wie etwa Dimmer, Rolladensteuerung, etc.). Allerdings besteht auch hier der Nachteil, daß das Design der Schalter nur von dem jeweiligen Hersteller selbst angebotene Schalterprogramme unterstützt und hier auch nicht das gesamte jeweilige Sortiment.

Beide vorgenannte Systeme weisen überdies den Nachteil auf, daß der schon bestehende Schalter i.d.R. funktionslos wird. Auch stellen hierbei auftretende Unterschiede im Design der Schalter sich insbesondere in entsprechend gestalteten Räumlichkeiten als Nachteil dar. Im ungünstigsten Fall hat der Anwender somit zwei optisch ungleiche Lichtschalter nebeneinander, von denen einer sogar funktionslos ist; eine insgesamt gesehen unbefriedigende Lösung.

Der derzeit auf dem Markt verfügbare Stand der Technik stellt sich damit wie folgt dar:

Tabelle 1: Der zum Zeitpunkt der Anmeldung am Markt verfügbare Stand der Technik nach Systemeigenschaftskategorien, mit den in nachfolgenden Anmerkungen wiedergegebenen Bemerkungen: 1) Schaltaktor erfordert Montage durch den Fachmann

| Eigenschaften<br><br>Hersteller,<br>Produkt,<br>Ausführung | Montage durch Nicht-Fachmann möglich | Eignet sich zur Umrüstung von Schalterprogrammen von Fremdherstellern | Systemoptik bleibt unabhängig vom vorhandenen Schalterprogramm beibehalten |
|---|:---:|:---:|:---:|
| Baumarktsystem,<br>Funkferngesteuerte Schaltsteckdose,<br>Wandsender/Schaltsteckdose | ✔ | | |
| INSTA,<br>instalight PLUS,<br>Wandsender/Schaltsteckdose | ✔ | | |
| PEHA,<br>Easywave,<br>Wandsender/Schaltsteckdose | ✔ | | |

(fortgesetzt)

| Eigenschaften<br>Hersteller,<br>Produkt,<br>Ausführung | Montage durch Nicht-Fachmann möglich | Eignet sich zur Umrüstung von Schalterprogrammen von Fremdherstellern | Systemoptik bleibt unabhängig vom vorhandenen Schalterprogramm beibehalten |
|---|---|---|---|
| MERTEN,<br>Funksystem,<br>Wandsender/Schaltsteckdose | ✓ | | |
| NIKO/MOELLER<br>Nikobus,<br>Wandsender/Schaltaktor 1) | | | |
| BUSCH-JÄGER,<br>Ferncontrol,<br>Wandsender/Schaltsteckdose | ✓ | | |
| SIEMENS<br>Gamma-Wave | | | |
| INSTA,<br>instalight PLUS,<br>UP-Sendemodul/Schaltsteckdose | | ✓ | ✓ |
| MERTEN,<br>Funksystem,<br>UP-Sendemodul/Schaltsteckdose | | ✓ | ✓ |
| MOELLER,<br>Moeller Funksystem,<br>UP-Sendemodul/Schaltaktor | | ✓ | ✓ |
| BUSCH-JÄGER,<br>Transcontrol,<br>UP-Sendemodul/Schaltaktor | | ✓ | ✓ |

Tabelle 1 zeigt, dass die auf dem Markt verfügbaren Systeme jeweils mindestens einen der folgenden Nachteile aufweisen:

- Die Montage muss bei Systemen nach dem Stand der Technik, die Arbeiten an der 230V Verdrahtung erfordern, von einem Fachmann durchgeführt werden. Die Montagekosten übersteigen dabei leicht die Kosten der eigentlichen Systemkomponenten. Insbesondere Privatanwender entscheiden sich aufgrund der hohen Gesamtkosten aus Montage- und Komponentenkosten gegen den Einsatz eines derartigen Systems nach dem Stand der Technik.

- Systeme nach dem Stand der Technik, die zur Selbstmontage durch den Anwender geeignet sind, werden insbesondere von Privatanwendern als unbefriedigend wahrgenommen, da sie sich entweder nicht in die bestehende Optik der vorhandenen Installationsschalter einfügen und/oder den vorhandenen Installationsschalter funktionslos werden lassen und/oder anders bedient werden als die vorhandenen Installationsschalter.

Zudem wird ein Fachmann bei den Systemen nach dem Stand der Technik auch zur Auswahl der Komponenten benötigt, indem der Fachmann beispielsweise den Typ des beim Anwender vorhandenen Schalterprogramms feststellt und dazu optisch passende Komponenten aussucht.

Zusammenfassend kann gesagt werden, dass es bei dem auf dem Markt befindlichen Stand der Technik nicht möglich ist, dass der Anwender sich beispielsweise in einem Lampengeschäft ohne Unterstützung eines Fachmanns ein System, bestehend aus einem nachrüstbaren Signalsender und -detektor und dem dazugehörigen Schaltempfänger, kauft, dieses System dann ohne Mithilfe eines Fachmanns in seiner Wohnung montiert und damit ein Ergebnis erzielt, welches seine Ansprüche an Optik und Bedienung erfüllt.

Ausgehend von diesem Stand der Technik ist es daher Aufgabe der vorliegenden Erfindung einen drahtlosen Signalsender und -detektor zum Einbau in bestehende elektrische Schalter oder Taster anzugeben, der ohne elektrische Installationsarbeiten nachrüstbar ist, also auch von einem Nicht-Fachmann montierbar ist, aber gleichzeitig die Nutzung bereits installierter Schalter oder Taster verschiedener Hersteller erlaubt.

Diese Aufgabe wird erfindungsgemäß durch einen drahtlosen Signalsender und -detektor zum Einbau in oder Anbau an bestehende installierte elektrische Schalter oder Taster mit zumindest einem angeschlossenen Leistungskontakt, vorzugsweise in oder an Lichtschalter oder Lichttaster, der im eingebauten oder angebauten Zustand ein Schalten oder Tasten oder eine Schaltstellung des elektrischen Schalters oder Tasters detektiert und ein entsprechendes Signal sendet und der erfindungsgemäß dadurch gekennzeichnet ist, daß er zum nachträglichen Einbau oder Anbau zusätzlich zu dem angeschlossenen Leistungskontakt oder den angeschlossenen Leistungskontakten des installierten Schalters oder Tasters ausgestaltet ist

Anzumerken ist, daß 'drahtlos' im Sinne der vorliegenden Erfindung alle nicht leitungsgebundenen Übertragungswege, also insbesondere Funkübertragung, Lichtübertragung, wie etwa Infrarotübertragung aber auch Schallübertragung wie etwa die Übertragung mittels Ultraschall umfaßt.

Dadurch, daß der erfindungsgemäße drahtlose Signalsender und -detektor zum Einbau bzw. Anbau zusätzlich zum angeschlossenen Leistungskontakt ausgestaltet ist und elektrisch unabhängig vom Stromkreis des Leistungskontakts ist, bedarf es keiner elektrischen Installationsarbeiten, d.h. die Installation kann auch von jedem Nicht-Elektriker ausgeführt werden, wobei der erfindungsgemäße drahtlose Signalsender und -detektor aus dem gleichen Grund vorzugsweise so ausgestaltet ist, daß er installiert werden kann, ohne, daß bestehende elektrische Kabelverbindungen entfernt oder gelöst werden müssen. Ebenso können durch den Einbau in bzw. Anbau an bereits bestehende Schalter oder Taster diese weiterbenutzt werden, was so zum einen tote Installationen verhindert, aber zum anderen auch das bestehende Design und die vom Anwender gewohnte Bedienung, d.h. Bedienort und Bedienweise, erhält.

Der Signaldetektor weist nach der vorliegenden Erfindung eine mechanische Verbindung mit einer Wippe des Schalters oder Tasters auf, wobei dies besonders bevorzugterweise so gestaltet ist, daß er nur eine mechanische Verbindung mit einer Wippe des Schalters oder Tasters aufweist. Dadurch kann der Signaldetektor die Betätigung des Schalters anhand der Bewegung der Wippe beim Schaltvorgang erkennen, benötigt keine elektrische Verbindung zum elektrischen Kontakt des Schalters oder Tasters und kann ohne Änderung der produktmäßigen Ausgestaltung des Signalsenders und -detektors an den meisten im Markt verfügbaren Installationsschaltern oder -tastern durch Ein- bzw. Anbau nachgerüstet werden, obwohl die jeweiligen Hersteller der Installationsschalter den Einbau eines solchen Signalsenders und -detektors ursprünglich nicht vorgesehen haben und die mechanische Ausgestaltung der Wippe des Schalters und damit die mechanische Ausgestaltung des Einbauortes des Signalsenders und -detektors stark von der Schalterserie und dem Hersteller des Schalters abhängt.

In einer besonders bevorzugten Ausführungsform der vorliegenden Erfindung ist der drahtlose Signalsender und -detektor so gestaltet, daß er eine Selbstklebefläche, vorzugsweise mit abziehbarer Schutzfolie, zur mechanischen Verbindung aufweist, wodurch eine einfache Montagemethode gegeben ist, die ohne Einsatz von speziellem Werkzeug von einem Nicht-Fachmann durchgeführt werden kann und wodurch gleichzeitig die Möglichkeit gegeben ist den Signalsender und -detektor zu demontieren und z.B. bei einem Wohnungswechsel an einem Installationsschalter der neuen Wohnung wieder zu montieren.

Auch kann der Signalsender und -detektor nach der vorliegenden Erfindung zur Montage in einem Hohlraum im Schalter oder Taster ausgestaltet sein. Dadurch ist er nach erfolgter Montage aus der Sicht des Benutzers optisch nicht erkennbar und das optische Erscheinungsbild des Schalters oder Tasters bleibt unverändert.

Vorzugsweise ist dabei der erfindungsgemäße Signalsender und -detektor zur Montage in dem Hohlraum zwischen Wippe und einem Schalteinsatz ausgestaltet, indem er eine Dicke von max 5 mm, vorzugsweise max. 3 mm und eine Breite und Höhe von max. 15mm, vorzugsweise max. 10mm, aufweist. Diese geringe Größe erlaubt die Montage der gleichen produktmäßigen Ausgestaltung des erfindungsgemäßen drahtlosen Signalsenders und - detektors in möglichst vielen Schalterprogrammen unterschiedlicher Hersteller, indem er nach dem Entfernen der Schaltwippe auf dessen Rückseite geklebt wird und dann die Schaltwippe wieder aufgesetzt wird. Die maximale Dicke des drahtlosen Signalsenders und -detektors von 3mm und eine Breite und Höhe von 10mm erlaubt die Montage der gleichen produktmäßigen Ausgestaltung des erfindungsmäßigen Gegenstands auch in Schaltern mit sehr kleinen Wippen.

In der vorliegenden Erfindung ist der drahtlose Signalsender und -detektor dadurch gekennzeichnet, daß der Signaldetektor ein Sensorelement, vorzugsweise einen Beschleunigungssensor, aufweist, das die durch Betätigung des Schalters oder Tasters hervorgerufene Bewegung erkennt.

Als Sensorelement kann dabei etwa

- ein piezoelektrisch arbeitender Sensor, z.B ein Piezofilm oder auch eine Piezokeramik, und so eine einfache, kostengünstige und stark miniaturisierte Konstruktion und eine hohe Lebensdauer der vorliegenden Erfindung erlaubt oder

- ein mikromechanischer Sensor, also eine integrierte Halbleiterschaltung, bei der das Sensorelement, z.B. ein Sensor zur Beschleunigungsmessung, als Bestandteil eines Siliziumchips ausgeführt ist und so eine vorteilhaft kleine Bauform des erfindungsmäßigen Gegenstands erlaubt oder

- ein magnetischer Sensor, der eine Spule und einen Permanentmagneten aufweist, oder

- ein Näherungssensor, der nach einem kapazitiven Prinzip arbeitet, oder

- ein Positionssensor, etwa ein Neigungsschalter, der eine besonders lange Lebensdauer der zur Energieversorgung verwendeten Batterie erlaubt.

vorgesehen sein.

Auch kann der drahtlose Signalsender und -detektor nach der vorliegenden Erfindung, so ausgestaltet sein, daß er eine Batterie als Energieversorgung, eine Auswerteschaltung und einen Batterieschalter zur Freigabe der Batterieversorgung des Signalsenders aufweist, wobei das Sensorelement bei Betätigung des Schalters oder Tasters die Auswerteschaltung so ansteuert, daß diese den Batterischalter derart ansteuert, daß dieser sodann die Energieversorgung von der Batterie zum Signalsender freigibt.

Ein Batterieschalter hat dabei - etwa gegenüber einer Lösung, bei der der Logikschaltkreis und der HF-Sender in einen sogenannten SLEEP-Modus versetzt werden - den Vorteil einer im Gegensatz zu solchen anderen Lösungen um den Faktor 10 - 40 reduzierten Stromaufnahme. Der sonst übliche Sleepmodus benötigt heutzutage etwa 2 $\mu$A im Gegensatz zu 50 - 200 nA im Falle der erfindungsgemäßen Lösung, die so erst eine vernünftige Betriebsdauer von i.d.R. zumindest 10 Jahren ermöglicht.

Dabei kann die Freigabe der Energieversorgung für eine bestimmte Zeit erfolgen, wobei die Freigabezeit der Energieversorgung vorzugsweise so bemessen ist, daß der Signalsender in dieser Zeit das dem Schalten oder Tasten oder der Schaltstellung entsprechende Signal senden kann und der Signalsender außerhalb der Signalübertragung aus Energiespargründen keine Energie verbraucht.

Auch kann die Freigabe der Energieversorgung so gestaltet sein, daß sie durch den Signalsender nach dem Senden des dem Schalten oder Tasten oder der Schaltstellung entsprechenden Signals zurückgenommen wird und so die Freigabezeit der Energieversorgung des Signalsenders auch bei von Schaltvorgang zu Schaltvorgang variierenden Signalübertragungszeiten an diese genau angepaßt ist und so der Energieverbrauch des Signalsenders minimiert werden kann.

Vorzugsweise ist der erfindungsgemäße drahtlose Signalsender und -detektor so aufgebaut, daß seine Stromaufnahme bei nicht freigegebener Energieversorgung max. 200 nA, vorzugsweise max. 50 nA, beträgt um eine besonders kleine Bauform bei gleichzeitig langer Lebensdauer der Batterie zu erreichen.

In einer weiteren besonders bevorzugten Ausführungsform ist der drahtloser Signalsender und -detektor nach der vorliegenden Erfindung, dadurch gekennzeichnet, daß der Signalsender einen Microcontroller aufweist, der die Signalsendung steuert, wobei dem Microcontroller vorzugsweise ein wiederbeschreibbarer Speicher zugeordnet ist, der die Software zur Steuerung des Microcontrollers aufweist. Dadurch sind zur Signalübertragung auch komplexe Kommunikationsprotokolle verwendbar oder Verschlüsselungsmechanismen zur Erhöhung der Übertragungssicherheit möglich. Die Verwendung eines Microcontrollers mit wiederbeschreibbarem Speicher erlaubt Anpassungen der Software auch nach dem Produktionsprozeß eines auf der Erfindung basierenden Produkts und so eine Zeitersparnis im Fertigungsprozeß, sowie eine Korrektur von etwaigen Softwarefehlern am fertigen Produkt.

Auch können Mittel vorgesehen sein, die ein Beschreiben des Speichers mittels eines über den Signalsender übertragenen Signals erlauben und so eine drahtlose Aktualisierung der Software im montierten Zustand des erfindungsgemäßen Gegenstand erlauben. Der Signalsender muß hierzu bidirektionale Übertragung zulassen, d.h. einen Transceiver enthalten.

An dieser Stelle sei angemerkt, daß unter einem Signalsender bei der hier vorliegenden Erfindung selbstverständlich auch solche verstanden werden, die Bestandteil einer bidirektionalen Sende-/Empfangseinheit, etwa des genannten Transceivers, sind.

Der erfindungsgemäße drahtlose Signalsender kann aber auch so aufgebaut sein, daß er eine festverdrahtete Logik, vorzugsweise ein ASIC aufweist, welches die Signalsendung steuert. Dadurch können bei entsprechend hohen Fertigungsstückzahlen besonders niedrige Produktionskosten erreicht werden.

Im folgenden werden nicht einschränkend zu verstehende Ausführungsbeispiele anhand der Zeichnung besprochen. In dieser zeigen:

**Fig. 1a- 1e** die Montage des erfindungsgemäßen drahtlosen Signalsenders und -detektors in bzw. an einem handelsüblichen Installationsschalter oder -taster.

**Fig. 2**      ein erstes mechanisches Konstruktionsbeispiel des erfindungsgemäßen Signalsenders und -detektors mit einem Piezofilm als Sensorelement.

**Fig. 3**      ein Blockschaltbild des erfindungsgemäßen drahtlosen Signalsenders und -detektors.

**Fig. 4**      ein Schaltbild eines ersten Ausführungsbeispiels des Batterieschalters inklusive Auswerteschaltung mit einem Piezofilm als Sensorelement.

**Fig. 5**      ein Schaltbild eines zweiten Ausführungsbeispiels des Batterieschalters inklusive Auswerteschaltung mit einem Neigungsschalter als Sensorelement.

**Fig. 6**      ein Schaltbild eines Ausführungsbeispiels der Spannungsversorgungseinheit zur Energieversorgung von Logikschaltkreis und HF-Schaltkreis.

**Fig. 7**      ein zweites mechanisches Konstruktionsbeispiel des erfindungsgemäßen drahtlosen Signalsenders und -detektors mit einem Positionssensor in Form eines Neigungsschalters als Sensorelement.

**Fig. 8**      ein drittes mechanisches Konstruktionsbeispiel des erfindungsgemäßen drahtlosen Signalssender und -detektors mit einem mikromechanischen Sensor als Sensorelement.

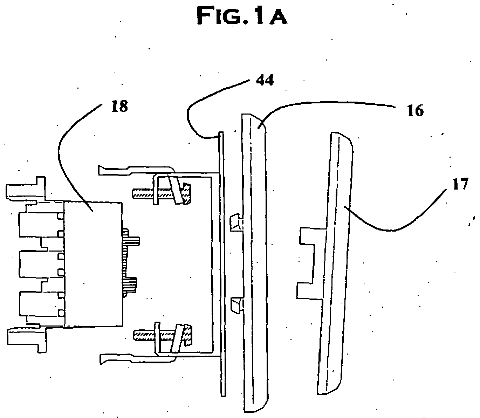

Die **Fig. 1a - 1e** zeigen die Montage des erfindungsgemäßen drahtlosen Signalsenders und - detektors in bzw. an einem handelsüblichen Installationsschalter oder -taster, mit angeschlossenem Leistungskontakt, wobei der Leistungskontakt vor, während und nach der Montage des erfindungsgemäßen drahtlosen Signalsenders und -detektors angeschlossen ist und bleibt.

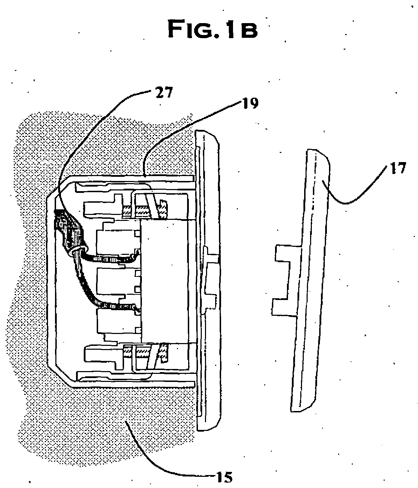

Dazu zeigt **Fig. 1a** eine Explosionszeichnung eines marktüblichen Installationsschalters oder -tasters, bestehend aus der Schalterwippe **17,** dem Rahmen **16,** dem UP-Montagerahmen **44** und dem Schaltereinsatz **18,** der auch die Leistungskontakte zum Schliessen oder Trennen des durch den Schalter gesteuerten Stromkreises beinhaltet. In **Fig. 1b** wird der aus den in Fig. 1a gezeigten Elementen bestehende Schalter in montiertem Zustand gezeigt, die Schalterwippe 17 ist zur Montage des erfindungsgemäßen drahtlosen Signalsenders und -detektors bereits abgenommen. Der montierte Schalter ist üblicherweise in eine Gerätedose **19** z.B. nach DIN49073 (UP-Dose) eingebaut, die wiederum in die Mauer **15** eines Gebäudes eingelassen ist. Der Schalter oder Taster ist an ein Elektrokabel **27** angeschlossen, welches zum Stromkreis des durch den Schalter gesteuerten elektrischen Verbrauchers, z.B. einer Lampe, gehört.

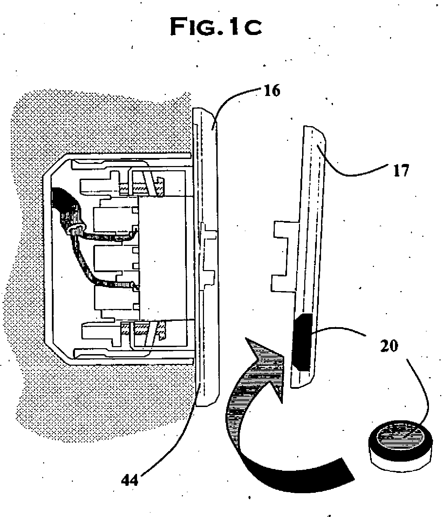

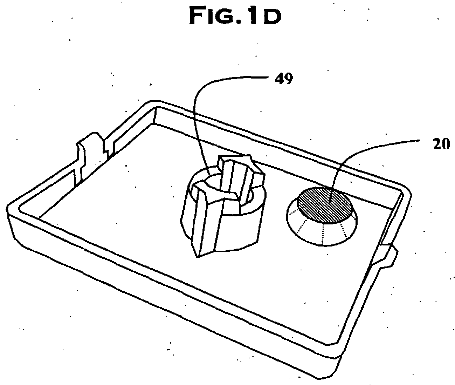

**Fig. 1c** zeigt die Montage des erfindungsgemäßen drahtlosen Signalsenders und - detektors **20** in dem Hohlraum zwischen Schalterwippe **17,** Rahmen **16** und UP-Montagerahmen **44.** Zur Verdeutlichung zeigt **Fig. 1d** eine handelsübliche Schalterwippe von der dem Betrachter im montierten Zustand der Schalterwippe nicht zugewandten Seite. Im mittleren Bereich der Rückseite der Schalterwippe befinden sich Halteelemente **49** zur Verbindung der Schalterwippe mit dem in Fig. 1a gezeigten Schaltereinsatz **18.** Zwischen den Halteelementen **49** und dem seitlichen Rand der Schalterwippe befindet sich bei den meisten handelsüblichen Installationsschaltern ausreichend Platz zum Anbringen des erfindungsgemäßen drahtlosen Signalsenders und -detektors **20.**

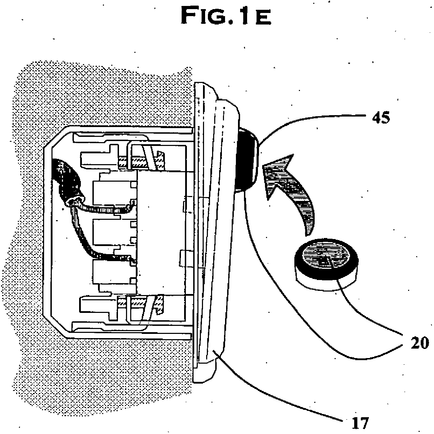

**Fig. 1e** zeigt eine alternative Montagemöglichkeit des erfindungsgemäßen drahtlosen Signalsenders und -detektors **20,** die sich von der in Fig.1c gezeigten Variante dadurch unterscheidet, dass der erfindungsgemäße drahtlose Signalsender und -detektor **20** nicht in einem Hohlraum hinter der Schalterwippe **17** eingebaut, sondern auf der dem Bediener zugewandten Vorderseite der Schalterwippe **17** angebaut ist. Das hier in **Fig. 1e** gezeigte Ausführungsbeispiel hat gegenüber dem Ausführungsbeispiel aus Fig. 1c den Vorteil einer besonders einfachen Montage, da das Entfernen und Wiederanbringen der Schalterwippe **17** entfällt. Aufgrund der kleinen Baugrösse des erfindungsgemäßen drahtlosen Signalsenders und -detektors **20** und bei entsprechender Abdeckung des erfindungsgemäßen drahtlosen Signalsenders und -detektors **20** mit einer Kappe **45** überwiegen für bestimmte Anwender die Vorteile der einfachen Montage die mit der sichtbaren Montage auf der Vorderseite der Schaltwippe **17** verbundenen optischen Nachteile.

Das in Fig. 1b gezeigte Elektrokabel **27** muß zu keiner Zeit während der Montage vom Lichtschalter entfernt werden oder die Anschlußstellen zwischen Elektrokabel **27** und dem in Fig. 1a gezeigten Schaltereinsatz **18** gelöst werden.

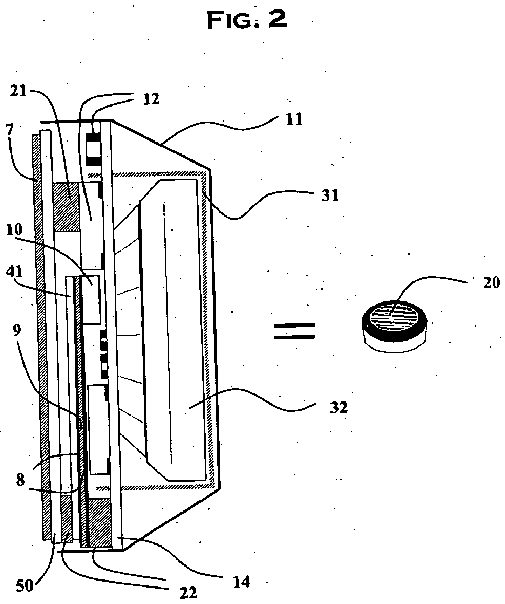

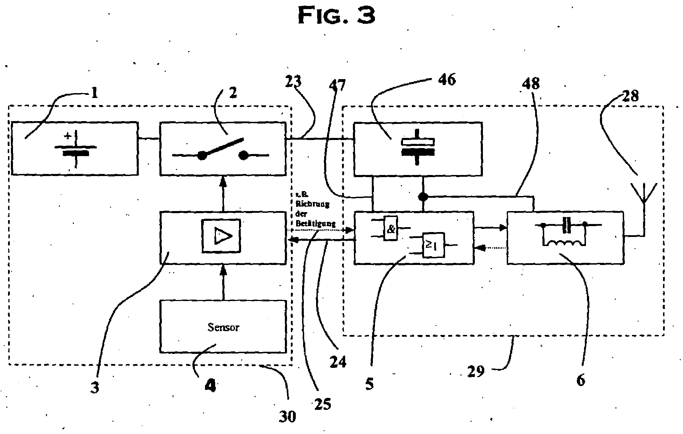

**Fig. 2** zeigt die Schnittzeichnung eines ersten Ausführungsbeispiels der mechanischen Konstruktion des drahtlosen Signalsenders und -detektors **20** mit einem Piezofilm als den in Fig. 3 gezeigten Sensor **4.** Man erkennt eine mit einer Gehäusekappe **11** abgedeckten, mechanisch starr verbundene Einheit, bestehend aus der oberen Trägerplatine **14** in Form einer gedruckten Schaltung, auf der einerseits die elektronischen Komponenten **12** montiert sind und andererseits die Batterie **32** mittels eines Bügels **31** befestigt ist. Diese erste Einheit ist mit mindestens einem Distanzstück **21** mit der unteren Trägerplatine **50** verbunden, wobei ein geteiltes Distanzstück **22** ein Ende einer bekannten Anordnung aus Piezofilm **9,** dessen Kontaktierungen **8** und einer auf den Piezofilm auflaminierten Kunstofffolie **41** planparallel zu den beiden Trägerplatinen **14** und **50** mechanisch starr fixiert. Die untere Trägerplatine **50** ist z.B. mit doppelseitigem Klebeband **7** an der in Fig. 1c oder Fig. 1e gezeigten Schalterwippe **17** starr befestigt und führt so die Kippbewegung der Schalterwippe **17** bei Betätigung derselben mit aus. Bei dieser Bewegung wird das Gewicht **10** beschleunigt, welches an dem dem geteilten Distanzstück **22** gegenüberliegenden, beweglichen Ende der Piezofolie **9** angebracht ist, wodurch die Anordnung aus Piezofilm **9,** dessen Kontaktierungen **8** und einer auf den Piezofilm auflaminierten Kunstofffolie **41** senkrecht zu der Fläche der oberen Trägerplatine **14** verformt wird und wodurch nach einem bekannten Prinzip an den Kontaktierungen **8** eine Spannung ensteht, die zur Detektion der Betätigung führt.

Nur ergänzend sei erwähnt, dass der Aufbau der in **Fig. 2** gezeigten Anordnung aus einlagigem Piezofilm **9,** dessen Kontaktierungen **8** und einer auf den Piezofilm auflaminierten Kunstofffolie **41** nur beispielhaft ist. Durch Anzahl der Lagen des Piezofilms, dessen Dicke und Material wird bei der produktmäßigen Ausgestaltung des Erfindungsgegenstands dessen Detektionsempfindlichkeit so eingestellt, dass die Bewegung der Schalterwippe sicher erkannt wird, gleichzeitig jedoch eine einfache Erschütterung nicht zur Detektion führt. Weiterhin ergänzend sei erwähnt, dass in einer speziellen Ausgestaltung des Signalsenders und -detektors unter Verwendung eines mechanisch flexiblen Materials für das Distanzstück **21** und gleichzeitiger Verwendung eines mechanisch starren Materials für die Elemente des geteilten Distanzstücks **22** und gleichzeitiger Anbringung der unteren Trägerplatine **50** derart, dass diese mechanisch zumindest nicht starr mit der Gehäusekappe verbunden ist, zusätzlich eine Detektion einer Betätigung und damit eine Aktivierung des in Fig. 3 gezeigten Signalsenders auch dann stattfindet, wenn eine Kraft auf die in Fig. 2 gezeigte Gehäusekappe **11** ausgeübt wird. Diese Kraft kann durch den Anwender ausgeübt werden, indem er auf die Gehäusekappe 11 des entsprechend Fig. 1e montierten Signalsenders und - detektors **20** mit einer, zwar eventuell zur Betätigung der Schaltwippe nicht ausreichenden, Kraft drückt, durch die der zwischen den beiden Teilen des geteilten Distanzstücks **22** angebrachte Piezofilm komprimiert wird und so auch eine zur Detektion der Betätigung ausreichenden Spannung an den Kontaktierungen **8** entsteht.

Diese zusätzliche Methode der Aktivierung des Signalsenders und -detektors **20** kann zur Realisierung von Komfortbedienungen, beispielsweise zur Steuerung der Helligkeit einer Lampe verwendet werden, indem der in Fig. 3 gezeigte Signalsender **29** von der Auswerteschaltung **3** eine entsprechende erweiterte Signalinformation **25** erhält, über die der Signalsender **29** eine Auswertung der zeitlichen Dauer des Signals zur Unterscheidung zwischen Betätigung der Schaltwippe (kurze Dauer des Signalimpulses) und Betätigung durch den Anwender (lange Dauer des Signalimpulses) vornimmt.

Ist diese zusätzliche Methode der Aktivierung nicht gewünscht, kann die untere Trägerplatine **50** mechanisch starr mit der Gehäusekappe **11** verbunden werden.

**Fig. 3** zeigt ein Blockschaltbild des erfindungsgemäßen drahtlosen Signalsenders und - detektors. Der drahtlose Signalsender und -detektor gibt Informationen über Funk an typischerweise stromnetzgebundene Steuergeräte weiter. Hierzu verfügt er über einen Signaldetektor **30** und einen Signalsender **29**. Der Signalsender **29** besteht aus einem HF-Schaltkreis **6** mit einer Antenne **28,** einem Logikschaltkreis **5** und einer Spannunsversorgungseinheit **46** zur Bereitstellung einer für Logikschaltkreis **5** und HF-Schaltkreis **6** geeigneten Versorgungsspannung **48**. Der HF-Schaltkreis 6 erzeugt eine hochfrequente Schwingung und moduliert dieser ein vom Logikschaltkreis 5 erhaltenes Funksendetelegramm auf. Die hochfrequente Schwingung hat zur Erreichung einer hohen Datenrate, damit einer kurzen Telegrammsendezeit und damit eines geringen Energieverbrauchs der Anordnung vorzugsweise eine Frequenz größer 1 MHz. Vorteilhafte Frequenzen sind die Bänder um 433MHz, 868MHz, 915MHz, 2.45GHz, 5.8GHz und 24GHz. Technisch besteht keine prinzipielle obere Grenze für diese Frequenz.

Der HF-Schaltkreis **6** kann aus einem Sender oder einer Sender/Empfänger Kombination bestehen.

Eine Sender/Empfänger Kombination hat gegenüber einem reinen Sender den Vorteil einer höheren Übetrtragungssicherheit wenn der Erhalt der Information mittels einer Bestätigung des Empfängers überprüft wird. Ebenso sind hier Komfortfunktionen möglich, z.B. Update der Software des im Logikschaltkreis 5 evtl. vorhandenen Mikrokontrollers.

Statt einer Funkübertragung können auch andere drahtlose Übetragungsarten verwendet werden, z.B. mittels infrarotem Licht.

Ein Logikschaltkreis 5 erzeugt aus der Betätigungsinformation ein Funksendetelegramm. Das Funksendetelegramm kann zusätzlich zur Information des Stattgefundenhabens einer Betätigung auch Zusatzinformationen enthalten, z.B. die Richtung der Betätigung (An/Aus) und/oder eine Nummer zur Identifikation des Signalsenders und -detektors und/oder Protokollinformation zur Einbindung des Signalsenders und -detektors in ein drahtloses Bussystem und/oder Redundanzinformation zur Erhöhung der Übertragungssicherheit.

Das Funksendetelegramm kann verschlüsselt werden, um bei der Übertragung sicherheitsrelevanter Betätigungsinformationen, z.B. Rolladenbetätigung, ungewollte Fremdbetätigung zu erschweren.

Wird eine Modulationsrate des Hochfrequenzsenders von 50 kBit/s vorrausgesetzt, können in 2 ms Daten mit einem Umfang von 100 Bit übertragen werden. Diese Datenmenge reicht zur verschlüsselten Übermittlung der Betätigungsinformation, etwaiger Zusatzinformation, Identifikation des Teilnehmers, Protokollinformation und Redundanzinformation aus und bietet auch die Möglichkeit einer einmaligen Wiederholung des Telegramms zur Erhöhung der Übertragungssicherheit.

Es ist vorteilhaft, wenn der Logikschaltkreis **5** einen Mikrokontroller oder einen ASIC enthält.

Nach Beenden der Übertragung des Funksendetelegramms übermittelt der Logikschaltkreis **5** an die Auswerteschaltung **3** ein Abschaltsignal **24,** wonach der Batterieschalter **2** die Verbindung **23** zwischen Batterie **1** und Spannungsversorgungseinheit **46** unterbricht.

Der Batterieschalter **2** schließt diese Verbindung erst wieder nachdem er ein entsprechendes Signal von der Auswerteschaltung **3** erhalten hat.

Die Auswerteschaltung **3** generiert dieses Signal zum Einschalten des Batterieschalters **2 ,** wenn sie vom Sensorelement **4** ein Signal erhält, welches einem Betätigungsvorgang entspricht.

Durch das Einschalten des Batterieschalters **2** wird der Signalsender **29** mit Batteriestrom versorgt. Der Logikschaltkreis **5** nimmt diesen Vorgang des Einschaltens der Energieversorgung zum Anlass das Funktelegramms mit der Betätigungsinformation zu senden.

Besonders vorteilhaft im Sinne der Erfindung ist es, wenn die Batterie **1** geringe mechanische Abmessungen aufweist, da die Batterie **1** wesentlich die mechanischen Abmessungen der gesamten Anordnung nach Fig. 3 hier bestimmt. Unter Verwendung einer Batterie der IEC-Bezeichnung IEC927, ist es möglich den drahtlosen Signalsender und -detektor mit den heutigen technischen Standards der Mikroelektronik derart zu konstruieren, dass er in einem Volumen mit einem Durchmesser von 15mm und einer Dicke von 5mm Platz findet. Dieses Volumen enthält die gesamte Anordnung aus **Fig. 3** hier inklusive der Batterie und der Antenne **28.**

Eine miniaturisierte Bauweise und damit verbundene geringe mechanische Abmessungen der Anordnung ist notwendig um die erfindungsgemäße Montage des drahtlosen Signalsenders und -detektors in den bestehenden Hohlräumen hinter der Wippe eines handelsüblichen Lichtschalters zu ermöglichen. Eine miniaturisierte Bauweise ist im Besonderen notwendig, da Abmessungen und Form der in handelsüblichen Lichtschaltern bestehenden Hohlräume sich je nach Hersteller und Produkttyp des Lichtschalters unterscheiden und so eine einzige produktmäßige Ausgestaltung des erfindungsgemäßen drahtlosen Signalsenders und -detektors, dessen mechanische Abmessungen sich auf das Schnittvolumen der Hohlräume möglichst vieler Lichtschaltertypen beschränkt, sich kommerziell vorteilhaft für die Montage in möglichst vielen Lichtschaltertypen eignet und so auch die erfindungsgemäße Anforderung erfüllt ist, dass der Anwender bei der Auswahl und der Montage der produktmäßigen Ausgestaltung des erfindungsgemäßen drahtlosen Signalsenders und -detektors keinen Fachmann benötigt.

Den erfindungsgemäßen Anforderungen an die mechanischen Abmessungen des drahtlosen Signalsenders und -detektors entspricht z.B. der Batterietyp mit der IEC-Bezeichnung CR927, einem Durchmesser von 9,5 mm, einer Dicke von 2,7 mm und einer Kapazität von etwa 30 mAh oder der Batterietyp mit der IEC-Bezeichnung CR1025, einem Durchmesser von 10mm und einer Dicke von 2,5mm und einer Kapazität von 30mAh.

Üblicherweise werden in Geräten dieser Gattung Batterien mit der IEC-Bezeichnung CR2032, einem Durchmesser von 20 mm, einer Dicke von 3,2 mm und einer Kapazität von etwa 250 mAh eingesetzt.

Gleichzeitig zu den geringen mechanischen Abmaßen des drahtlosen Signalsenders und -detektors ist eine lange Lebensdauer der Batterie von mehr als 5 Jahren, vorzugsweise von mehr als 10Jahren, notwendig damit der durch den Batteriewechsel bedingte Wartungsaufwand der erfindungsgemäßen Anordnung, gerade bei gleichzeitigem Einsatz von mehreren drahtlosen Signalsendern und -detektoren in einem Gebäude, gering bleibt.

Eine Energiebetrachtung zeigt den hauptsächlichen Einfluß des Ruhestroms der Anordnung auf die Lebensdauer der Batterie.

| | |
|---|---|
| Stromaufnahme während des Sendevorgangs: | $I\_send := 30$ mA |
| Dauer des Sendevorgangs: | $T\_send := 2$ ms $= 5,56 \cdot 10^{-7}$ h |
| Stromaufnahme während der Ruhepausen: | $I\_ruhe := 150$ nA |
| Anzahl Betätigungen pro Tag: | $N\_pro\_d := 10$ |
| Anzahl Tage in 1 Jahr: | $N\_d\_pro\_yr := 365,25$ |
| Anzahl Stunden in 1 Jahr: | $N\_h\_pro\_yr := 8766$ h |

Die folgende Berechnung zeigt die innerhalb von 10 Jahren verbrauchte Batteriekapazität einmal für die Summe aller Sendevorgänge und einmal für die Summe der Zeit zwischen den Sendevorgängen:

Kapazitätsverbrauch der Sendevorgänge =

$$I\_send * T\_send * N\_pro\_d * N\_d\_pro\_yr * 10 = 0,61 \text{ mAh}$$

$$\text{Kapazitätsverbrauch des Ruhezustands} = I\_ruhe * N\_h\_pro\_yr * 10 = 13{,}15 \text{ mAh}$$

Eine erfindungsmäßig geeignete Batterie des Typs CR927 mit einer Kapazität von etwa 30 mAh würde selbst bei einer angenommenen Selbstentladung von 1% der Batteriekapazität pro Jahr einen mehr als zehnjährigen Betrieb zulassen.

In dem gezeigten Berechnungsbeispiel ist die durch den Ruhezustand bedingte Energieentnahme aus der Batterie 1 um etwa den Faktor 22 höher als die durch die Summe aller Sendevorgänge bedingte Energieentnahme.

Besonders vorteilhaft im Sinne der Erfindung ist es deswegen, das die Anordnung nach der Fig. 3 hier des drahtlosen Signalsenders und -detektors ausschließlich während des wenige Millisekunden dauernden Sendevorgangs der Batterie Energie entnimmt und in den Ruhephasen dazwischen eine gegen null gehende Energieentnahme aus der Batterie aufweist (Ruhestrom maximal 200 nA).

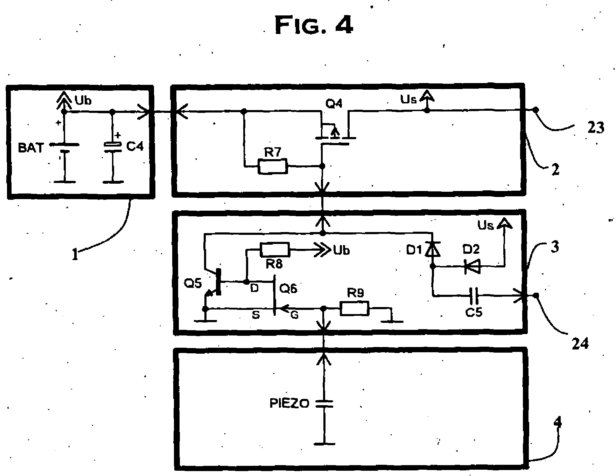

Fig. 4 zeigt ein Schaltbild eines ersten Ausführungsbeispiels des Batterieschalters inklusive Auswerteschaltung mit einem Piezofilm als Sensorelement. Das verwendete Sensorelement **4** ist auf Basis eines Piezofilms der Dicke 0,11 mm konstruiert.

Der Piezofilm ist mechanisch derart mit dem Betätigungselement, z.B. der Schaltwippe eines Lichtschalters, verbunden, dass bei jeder Betätigung eine Ladungsverschiebung am Piezofilm entsteht. Zur Auswertung dieser Ladungsverschiebung ist der Piezofilm hochohmig mit dem Gate eines J-Feldeffekttransistors **Q6** verbunden.

Die Verwendung eines J-Feldeffekttransistors ist im Sinne der Erfindung besonders vorteilhaft, da hierdurch Piezofilme mit besonders geringen mechanischen Abmessungen verwendet werden können.

Die Ladungsverschiebung im Piezofilm führt dazu, dass am Gate des J-Feldeffekttransistors **Q6** ein Spannungsimpuls entsteht, für dessen Dauer der J-Feldeffekttransistor **Q6** sperrt und dadurch über den Widerstand **R8** ein Basisstrom in den Transistor **Q5** fließt.

Der Transistor **Q5** leitet nun und lädt das Gate des MOSFETs **Q4** auf, wodurch der MOSFET **Q4** durchschaltet und über die Verbindung **23** den in Fig.3 gezeigten Signalsender **29** aktiviert.

Der am Piezofilm generierte Spannungsimpuls ist kürzer als die zur Übertragung des Funksendetelegramms benötigte Zeit, so daß der hier in **Fig. 4** gezeigte Transistor **Q5** vor Beendung der Telegrammübertragung sperrt. Dadurch wird das Gate des MOSFETs **Q4** über den Widerstand **R7** entladen. Durch eine geeignete Bemessung der Bauelementewerte der Schaltung hier in **Fig. 4** wird erreicht, dass der MOSFET **Q4** trotz dieses Entladevorgangs länger leitfähig bleibt als zur Übertragung des Funktelegramms erforderlich ist.

Nach Beendigung der Telegrammübertragung generiert der in Fig. 3 gezeigte Logikschaltkreis **5** ein Signal zum Abschalten des in **Fig.4** gezeigten MOSFETS **Q4,** indem er zunächst das Abschaltsignal **24** mit dem negativen Pol der Batterie **1** verbindet. Dadurch lädt sich der Kondensator **C5** über die Diode **D2** auf. Danach verbindet er das Abschaltsignal **24** mit der Verbindung **23.** Dadurch entlädt sich das Gate des MOSFET **Q4** über die Diode **D1** in den Kondensator **C5** worauf der MOSFET **Q4** sperrt. Die Kapazität des Kondensator **C5** ist hierzu groß gegenüber der Kapazität des Gates des MOSFETs **Q4** bemessen.

Die erfindungsgemäße Anordnung aus Fig. 4 befindet sich nun bis zur erneuten Betätigung im Ruhezustand. In diesem Zustand setzt sich der Ruhestrom im wesentlichen aus dem Drain-Source-Reststrom des MOSFETs **Q4** (max. 100nA bei 25°C) und dem Kollektor-Emitter Reststroms des Transistors **Q5** (max. 15nA bei 25°C), sowie dem Ruhestroms durch den Widerstand **R8** (max. 85nA) zusammen. Geeignete Transistoren, z.B. die Verwendung der Typen BC847C des Herstellers Infineon als **Q5** und BSS84 des Herstellers Philips als **Q4** erlauben eine erfindungsgemäße Stromaufnahme im Ruhezustand von maximal 200nA.

Die maximale Ruhestromaufnahme wurde unter Verwendung der vom Hersteller angegebenen Maximalwerte bestimmt. Diese Bestimmungsmethode ist für die Eignung der Schaltung zur Serienproduktion Vorraussetzung. Die bei einem Laboraufbau erreichten Werte liegen deutlich unter den angegebenen Maximalwerten.

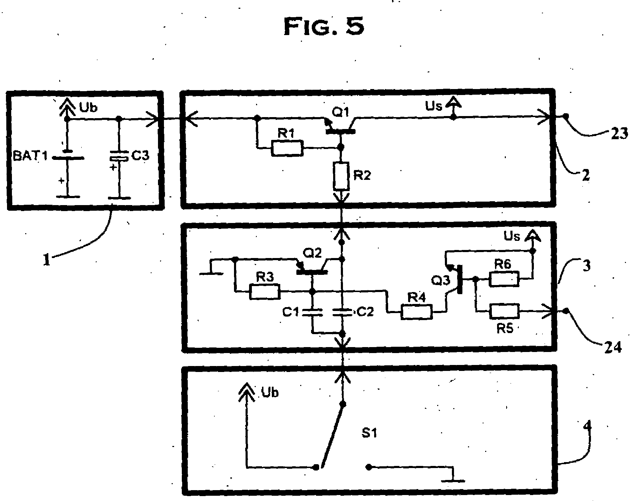

Fig. 5 zeigt ein Schaltbild eines zweiten Ausführungsbeispiels des Batterieschalters inklusive Auswerteschaltung mit einem Neigungsschalter als Sensorelement.

Das hier verwendete Sensorelement **4** ist auf Basis eines Neigungsschalters **S1** konstruiert, der abhängig von der Neigungsrichtung des Betätigungselements, z.B. der Schalterwippe eines Lichtschalters, zwei unterschiedliche Schaltstellungen einnimmt. Die Veränderung der Schaltstellung des Neigungsschalters **S1** wird von der Auswerteschaltung **3** erkannt, die dann dem Batterieschalter **2** ein Signal zum Einschalten gibt, wodurch der in Fig.3 gezeigte Signalsender **29** über die in **Fig.5** gezeigte Verbindung **23** mit der Batterie **1** verbunden wird.

Der Batterieschalter **2** besteht aus einem Transistor **Q1**, der über die Widerstände **R1** und **R2** von der Auswerteschaltung **3** angesteuert wird. Die Auswerteschaltung **3** ist mit dem Sensorelement **4** über die Kondensatoren **C1** und **C2** verbunden.

Der Kondensator **C2** ist in der gezeigten Schaltstellung des Neigungsschalters **S1** entladen. Bei einem jetzt eintretenden Wechsel der Schaltstellung des Neigungsschalters **S1** lädt sich der Kondensator **C2** über die Basis-Emitter-Strecke des Transistors **Q1** auf. Der Transistor **Q1** wird so für die Dauer des Ladevorgangs von **C2** eingeschaltet.

Die Dauer dieses Ladevorgangs wird durch die Dimensionierung der Bauteile so eingestellt, daß die Ladezeit ausreicht um den über Verbindung **23** angeschlossenen, in Fig.3 gezeigten Logikschaltkreis **5** zu aktivieren (z.B. 50us). Dieser schaltet dann über das in **Fig.5** gezeigte Abschaltsignal **24** und die Widerstände **R5** und **R6** den Transistor **Q3** ein. Durch das Einschalten des Transistors **Q3** wird über die Widerstände **R3** und **R4** der Transistor **Q2** eingeschaltet. Der eingeschaltete Transistor **Q2** versorgt den Transistor **Q1** unabhängig von dem Ladestrom des Kondensators **C2** mit Basisstrom.

Der Transistor **Q1** bleibt nun solange eingeschaltet bis der in Fig.3 gezeigte Logikschaltkreis **5,** nach Beenden der Übertragung des Funksendetelegramms, den in **Fig.5** gezeigten Transistor **Q3** wieder ausschaltet.

Der Basisstrom des Transistors **Q1** führt nun zum vollständigen Aufladen des Kondensator **C2,** wodurch der Transistor **Q1** abschaltet und die in Fig.3 gezeigten Logikschaltkreis **5** und HF-Schaltkreis **6** stromlos werden.

Die Schaltung befindet sich nun bis zum erneuten Wechsel der Schaltstellung des Neigungsschalters **S1** im Ruhezustand. In diesem Zustand setzt sich der Ruhestrom im wesentlichen aus dem Kollektor-Emitter-Reststrom der Transistoren **Q1** und **Q2** zusammen. Bei Verwendung geeigneter Transistoren, z.B. der Typen des Herstellers Infineon BC847 als **Q1** und BC857 als **Q2,** die einen maximalen Kollektor-Emitter Reststrom im Sperrzustand von maximal 15nA aufweisen, beträgt die maximale Gesamtstromaufnahme des erfindungsgemäßen drahtlosen Signalsenders und -detektors in abgeschaltetem Zustand (Standby-Betrieb, was einem abgeschalteten Batterieschalter entspricht) maximal weniger als 50nA.

Bei einem erneuten Wechsel der Schaltstellung des Neigungsschalters **S1** von der in **Fig.5** nicht gezeigten Schaltstellung in die in **Fig.5** gezeigte Schaltstellung wird der Kondensator **C1** über die Basis-Emitter-Strecke des Transistors **Q2** aufgeladen. Dadurch wird der Transistor **Q1** eingeschaltet. Die weiteren Vorgänge sind ähnlich zu den bereits beschriebenen Abläufen beim umgekehrten Wechsel der Schaltstellung des Neigungsschalters **S1.**

Zusätzlich zu den gezeigten Ausführungsbeispielen können nach einem ähnlichen Prinzip auch andere Sensoren als Sensorelement **4** verwendet werden.

Es eignet sich auch ein magnetischer Sensor, z.B. in Form einer Anordnung aus Dauermagnet und elektrischer Spule.

Ebenso läßt sich ein mikromechanischer Sensor verwenden. Dabei handelt es sich um eine integrierte Halbleiterschaltung, bei der das Sensorelement, z.B. ein Sensor zur Beschleunigungsmessung, als Bestandteil eines Siliziumchips ausgeführt ist und so eine vorteilhaft kleine Bauform des erfindungsgemäßen drahtlosen Signalsenders und -detektors erlaubt.

Ebenso können die in Fig. 4 und Fig. 5 gezeigten Schaltungen um weitere Schaltungsteile zur Signalisierung der Position des Betätigungselements an den in Fig. 3 gezeigten Logikschaltkreis erweitert werden.

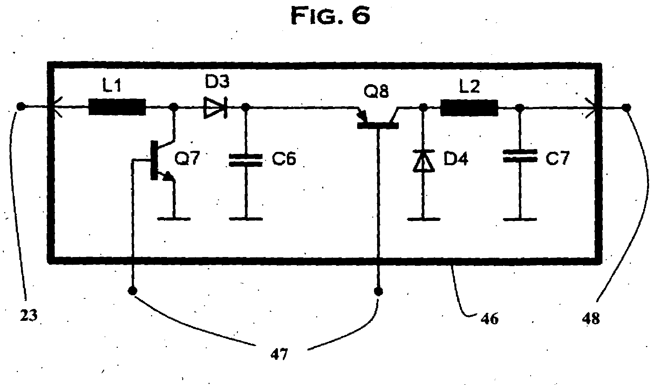

**Fig. 6** zeigt ein Schaltbild eines Ausführungsbeispiels der Spannungsversorgungseinheit **46** zur Energieversorgung der in Fig. 3 gezeigten Logikschaltkreis **5** und HF-Schaltkreis **6.** Diese Spannungsversorgungseinheit ist notwendig, da die in Fig.3 gezeigte Batterie 1 aufgrund dessen hohen Innenwiderstandes, insbesondere bei den für die vorliegende Erfindung besonders geeigneten Batterien kleiner Bauform oft nicht den zum Betrieb des Signalsenders **29** erforderlichen Strom bei gleichzeitig ausreichend hoher Spannung liefern kann. Dazu enthält die Spannungsversorgungseinheit **46** einen aus **L1**, **Q7, D3** und **C6** bestehenden Hochsetz-Steller, der nachdem die vom Batterieschalter kommende Verbindung **23** mit der Batterie verbunden ist, in einem ersten Schritt über die Steuerleitungen **47** so gesteuert wird, dass der Kondensator **C6** unter entsprechend niedriger Stromentnahme aus der Batterie solange geladen wird, bis die im Kondensator **C6** gespeicherte Energie zur Übertragung des Funktelegramms ausreicht. Während dieser Zeit sind der in Fig. 3 gezeigte Logikschaltkreis **5** und der HF-Schaltkreis **6** größtenteils deaktiviert. In einem zweiten Schritt wird dann ein aus **Q8, L2, D4** und C7 bestehender Tiefsetz-Steller so gesteuert, dass unter Entnahme der vorher in **C6** gespeicherten Energie eine ausreichende Versorgungsspannung **48** für den Logikschaltkreis 5 und den HF-Schaltkreis 6 zur Übertragung des Funktelegramms zur Verfügung steht.

Die Spannungsversorgungseinheit **46** hat den Vorteil, dass auch bei teilweiser Entladung der Batterie 1 ein stabiler Betrieb des Signalsenders **29** möglich ist oder zur Erzielung hoher Funkreichweiten HF-Schaltkreise **6** mit höherer HF-Leistung und damit verbundener höherer Stromaufnahme eingesetzt werden können.

Ergänzend sind im folgenden noch weitere mechanische Konstruktionsbeispiele des erfindungsgemäßen drahtlosen Signalsenders und -detektors gezeigt, die verdeutlichen, dass als Sensorelement **4** verschiedene Verfahren nach dem Stand der Technik eingesetzt werden können, die alle mit geringen Unterschieden zur Lösung der erfindungsgemäßen Aufgabe führen.

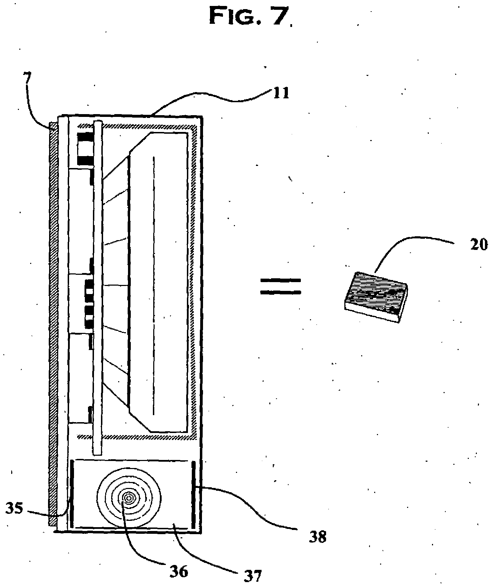

**Fig. 7** zeigt ein zweites mechanisches Konstruktionsbeispiel des erfindungsgemäßen drahtlosen Signalsenders und -detektors **20,** das dem in Fig. 2 gezeigten Ausführungsbeispiel entspricht, mit dem Unterschied, dass das in Fig. 7 gezeigte Ausführungsbeispiel einen Positionssensor in Form eines Neigungsschalters und keinen Piezofilm als das in Fig. 3 aufgeführte Sensorelement 4 verwendet.

Der hier beispielhaft gezeigte Neigungsschalter besteht aus einem Metallrohr **37** welches derart angeordnet ist, dass eine sich lose im Metallrohr **37** befindende Metallkugel **36** je nach Kipprichtung der Schalterwippe **17** zu jeweils einem Ende des Metallrohrs **37** rollt und dort eine elektrische Verbindung zwischen Metallrohr 37 und abhängig von der Kipprichtung einem der Kontakte **35** oder **38** herstellt. Die Anordnung aus Metallrohr **37,** Kugel **36** und Kontakten **35** und **38** entspricht elektrisch dem in Fig. 5 gezeigten Neigungsschalter **S1**.

Zur mechanischen Verbindung des erfindungsgemäßen drahtlosen Signalsenders und - detektors **20** mit der Schalterwippe 17 dient auch in dem in Fig. 7 gezeigten Ausführungsbeispiel ein doppelseitiges Klebeband 7.

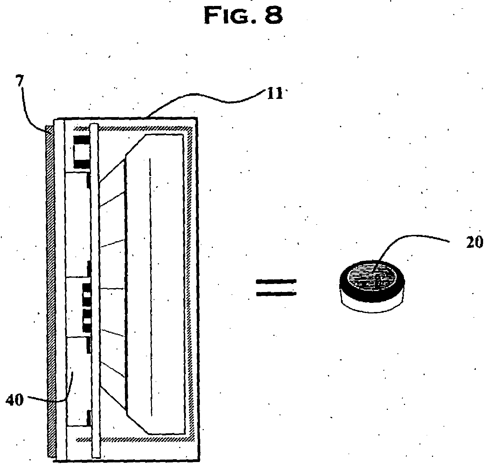

**Fig. 8** zeigt ein drittes mechanisches Konstruktionsbeispiel des erfindungsgemäßen drahtlosen Signalsenders und -detektors **20,** das dem in Fig. 2 gezeigten Ausführungsbeispiel entspricht, mit dem Unterschied, dass das in Fig. 8 gezeigte Ausführungsbeispiel einen mikromechanischen Sensor und keinen Piezofilm als das in Fig. 3 aufgeführte Sensorelement **4** verwendet.

Als mikromechanischer Sensor wird hier verstanden, dass die einzelnen mechanischen Komponenten z.B. eines Beschleunigungssensors zur Detektion der Bewegung der Schaltwippe mit Methoden hergestellt werden, die zur Halbleiterfertigung eingesetzt werden und deswegen eine besonders kleine Bauform aufweisen, zusätzlich kostengünstig wie ein elektronisches Bauelement verarbeitet werden können und vorteilhaft im Sinne kleiner mechanischer Abmessungen des erfindungsgemäßen drahtlosen Signalsenders und -detektors bereits Teile der elektronischen Komponenten des Signalsenders und -detektors auf der den Sensor darstellenden Halbleiterschaltung beinhalten. Sensoren dieser Art nach dem Stand der Technik werden z.B. in Airbags eingesetzt.

Der in **Fig. 8** gezeigte mikromechanische Sensor **40** ist wie eine elektronische Komponente montiert. Dadurch hat das in Fig. 8 gezeigte Ausführungsbeispiel gegenüber den in Fig.2 und Fig.7 gezeigten Ausführungsbeispielen den Vorteil niedriger Produktionskosten und besonders geringer mechanischer Abmessungen des erfindungsgemäßen drahtlosen Signalsenders und -detektors, wodurch die Montage in Installationsschaltern und -Tastern mit besonders kleinen Schaltwippen ermöglicht wird.

**Patentansprüche**

1.    Drahtloser Signalsender und -detektor (20) zum nachträglichen Einbau in oder Anbau an bestehende, installierte, elektrische Schalter oder Taster, vorzugsweise Lichtschalter oder Lichttaster, mit zumindest einem angeschlossenen Leistungskontakt, aufweisend einen Signalsender (29) und einen Signaldetektor (30) wobei der drahtlose Signalsender und -detektor (20) so ausgebildet ist, dass er im eingebauten oder angebauten Zustand ein Schalten oder Tasten oder eine Schaltstellung des elektrischen Schalters oder Tasters detektiert und ein entsprechendes Signal sendet, und wobei der drahtlose Signalsender und - detektor (20) elektrisch unabhängig vom Stromkreis des angeschlossenen Leistungskontakts oder der angeschlossenen Leistungskontakte ist, **dadurch gekennzeichnet, dass** der drahtlose Signalsender und -detektor (20) eine Batterie (1) als Energieversorgung aufweist, dass der Signaldetektor (30) eine mechanische Verbindung mit einer Wippe (17) des Schalters oder Tasters aufweist, dass der Signaldetektor (30) ein Sensorelement (4) aufweist, das die durch Betätigung des Schalters oder Tasters hervorgerufene Bewegung der Wippe (17) erkennt, und dass der Signalsender und -detektor (20) ferner eine Auswerteschaltung (3) und einen Batterieschalter (2) zur Freigabe der Batterieversorgung des Signalsenders aufweist, wobei das Sensorelement (4) bei Betätigung des Schalters oder Tasters die Auswerteschaltung (3) so ansteuert, dass diese den Batterieschalter (2) derart ansteuert, dass dieser sodann die Energieversorgung von der Batterie (1) zum Signalsender freigibt.

2.    Drahtloser Signalsender und -detektor (20) nach Anspruch 1, **dadurch gekennzeichnet, dass** der Signaldetektor (20) nur eine mechanische Verbindung mit einer Wippe (17) des Schalters oder Tasters aufweist.

3.    Drahtloser Signalsender und -detektor (20) nach Anspruch 1 oder 2, **dadurch gekennzeichnet, dass** der Signalsender und -detektor (20) eine Selbstklebefläche (7), vorzugsweise mit abziehbarer Schutzfolie, zur mechanischen Verbindung aufweist.

4.    Drahtloser Signalsender und -detektor (20) nach einem der Ansprüche 1 bis 3, **dadurch gekennzeichnet, dass** der Signalsender und - detektor (20) zur Montage in einem Hohlraum im Schalter oder Taster ausgestaltet ist.

5.    Drahtloser Signalsender und -detektor (20) nach Anspruch 4, **dadurch gekennzeichnet, dass** der Signalsender und -detektor (20) zur Montage in dem Hohlraum zwischen Wippe (17) und einem Schalteinsatz (18) ausgestaltet ist, dadurch, dass er eine Dicke von max 5 mm, vorzugsweise max. 3 mm, aufweist.

6.    Drahtloser Signalsender und -detektor (20) nach einem der vorangehenden Ansprüchen, **dadurch gekennzeichnet, dass** als Sensorelement (4) ein piezoelektrisch arbeitender Sensor vorgesehen ist.

**7.** Drahtloser Signalsender und -detektor (20) nach Anspruch 6, **dadurch gekennzeichnet, dass** als piezoelektrisch arbeitender Sensor ein Piezofilm (9) vorgesehen ist.

**8.** Drahtloser Signalsender und -detektor (20) nach Anspruch 6, **dadurch gekennzeichnet, dass** als piezoelektrisch arbeitender Sensor eine Piezokeramik vorgesehen ist.

**9.** Drahtloser Signalsender und -detektor (20) nach einem der Ansprüchen 1 bis 5, **dadurch gekennzeichnet, dass** als Sensorelement ein mikromechanischer Sensor (40) vorgesehen ist.

**10.** Drahtloser Signalsender und -detektor (20) nach einem der Ansprüchen 1 bis 5, **dadurch gekennzeichnet, dass** als Sensorelement (4) ein magnetischer Sensor vorgesehen ist, der eine Spule und einen Permanentmagneten aufweist.

**11.** Drahtloser Signalsender und -detektor (20) nach einem der Ansprüchen 1 bis 5, **dadurch gekennzeichnet, dass** als Sensorelement (4) ein Näherungssensor vorgesehen ist, der nach einem kapazitiven Prinzip arbeitet.

**12.** Drahtloser Signalsender und -detektor (20) nach einem der vorangehenden Ansprüchen, **dadurch gekennzeichnet, dass** als Signaldetektor (30) ein Positionssensor vorgesehen ist.

**13.** Drahtloser Signalsender und -detektor (20) nach Anspruch 12, **dadurch gekennzeichnet, dass** als Positionssensor ein Neigungsschalter (S1) vorgesehen ist.

**14.** Drahtloser Signalsender und -detektor (20) nach einem der vorangehenden Ansprüchen, **dadurch gekennzeichnet, dass** die Freigabe der Energieversorgung für eine bestimmte Zeit erfolgt.

**15.** Drahtloser Signalsender und -detektor (20) nach Anspruch 14, **dadurch gekennzeichnet, dass** die Freigabezeit der Energieversorgung so bemessen ist, dass der Signalsender in dieser Zeit das dem Schalten oder Tasten oder der Schaltstellung entsprechende Signal senden kann.

**16.** Drahtloser Signalsender und -detektor (20) nach einem der Ansprüche 1 bis 13, **dadurch gekennzeichnet, dass** die Freigabe der Energieversorgung durch den Signalsender nach dem Senden des dem Schalten oder Tasten oder der Schaltstellung entsprechenden Signals zurückgenommen wird.

**17.** Drahtloser Signalsender und -detektor (20) nach einem der vorangehenden Ansprüche, **dadurch gekennzeichnet, dass** der Signalsender einen Microcontroller aufweist, der die Signalsendung steuert.

**18.** Drahtloser Signalsender und -detektor (20) nach Anspruch 17, **dadurch gekennzeichnet, dass** dem Microcontroller ein wiederbeschreibbarer Speicher zugeordnet ist, der die Software zur Steuerung des Microcontrollers aufweist.

**19.** Drahtloser Signalsender und -detektor (20) nach Anspruch 18, **dadurch gekennzeichnet, dass** Mittel vorgesehen sind, die ein Beschreiben des Speichers mittels eines über den Signalsender übertragenen Signals erlauben.

**20.** Drahtloser Signalsender und -detektor (20) nach einem der Ansprüche 1 bis 16, **dadurch gekennzeichnet, dass** der Signalsender eine festverdrahtete Logik, vorzugsweise ein ASIC aufweist, welches die Signalsendung steuert.

**21.** Drahtloser Signalsender und -detektor (20) nach einem der vorangehenden Ansprüche, **dadurch gekennzeichnet, dass** er nur zum Einbau, nicht aber zum Anbau an bestehende installierte elektrische Schalter oder Taster dient.


**Claims**

**1.** Wireless signal transmitter and detector (20) for subsequent installation in or mounting on existing, installed electrical switches or key switches, preferably light switches or light key switches, having at least one connected power contact, having a signal transmitter (29) and a signal detector (30), the wireless signal transmitter and detector (20) being designed in such a manner that in the installed or mounted state, it detects a switching or keying or a switch position of the electrical switch or key switch and transmits a corresponding signal, and the wireless signal transmitter and detector (20) being electrically independent of the circuit of the connected power contact or of the connected power contacts,

**characterized in that**
the wireless signal transmitter and detector (20) has a battery (1) as power supply, **in that** the signal detector (30) has a mechanical connection with a rocker (17) of the switch or key switch, **in that** the signal detector (30) has a sensor element (4) which detects the movement of the rocker (17) caused by operation of the switch of key switch, and **in that** the signal transmitter and detector (20) also has an evaluating circuit (3) and a battery switch (2) for enabling the battery supply of the signal transmitter, the sensor element (4), on operation of the switch or key switch, driving the evaluating circuit (3) in such a manner that said evaluating circuit drives the battery switch (2) in such a manner that said battery switch then enables the power supply from the battery (1) to the signal transmitter.

2. Wireless signal transmitter and detector (20) according to Claim 1, **characterized in that** the signal detector (20) only has one mechanical connection with a rocker (17) of the switch or key switch.

3. Wireless signal transmitter and detector (20) according to Claim 1 or 2, **characterized in that** the signal transmitter and detector (20) has a self-adhesive area (7), preferably with removable protective foil, for the mechanical connection.

4. Wireless signal transmitter and detector (20) according to one of Claims 1 to 3, **characterized in that** the signal transmitter and detector (20) is equipped for assembly in a hollow space in the switch or key switch.

5. Wireless signal transmitter and detector (20) according to Claim 4, **characterized in that** the signal transmitter and detector (20) is equipped for assembly in the hollow space between rocker (17) and a switching insert (18) due to the fact that it has a thickness of 5 mm max., preferably 3 mm max.

6. Wireless signal transmitter and detector (20) according to one of the preceding claims, **characterized in that** a piezoelectrically operating sensor is provided as sensor element (4).

7. Wireless signal transmitter and detector (20) according to Claim 6, **characterized in that** a piezo film (9) is provided as piezoelectrically operating sensor.

8. Wireless signal transmitter and detector (20) according to Claim 6, **characterized in that** a piezo ceramic is provided as piezoelectrically operating sensor.

9. Wireless signal transmitter and detector (20) according to one of Claims 1 to 5, **characterized in that** a micromechanical sensor (40) is provided as sensor element.

10. Wireless signal transmitter and detector (20) according to one of Claims 1 to 5, **characterized in that** a magnetic sensor which has a coil and a permanent magnet is provided as sensor element (4).

11. Wireless signal transmitter and detector (20) according to one of Claims 1 to 5, **characterized in that** a proximity sensor which operates in accordance with a capacitive principle is provided as sensor element (4).

12. Wireless signal transmitter and detector (20) according to one of the preceding claims, **characterized in that** a position sensor is provided as signal detector (30).

13. Wireless signal transmitter and detector (20) according to Claim 12, **characterized in that** an inclination switch (S1) is provided as position sensor.

14. Wireless signal transmitter and detector (20) according to one of the preceding claims, **characterized in that** the enabling of the power supply takes place for a particular period.

15. Wireless signal transmitter and detector (20) according to Claim 14, **characterized in that** the enabling period of the power supply is dimensioned in such a manner that the signal transmitter can transmit in this period the signal corresponding to the switching or keying or the switch position.

16. Wireless signal transmitter and detector (20) according to one of Claims 1 to 13, **characterized in that** the enabling of the power supply by the signal transmitter is cancelled after the transmitting of the signal corresponding to the switching or keying or the switch position.

**17.** Wireless signal transmitter and detector (20) according to one of the preceding claims, **characterized in that** the signal transmitter has a microcontroller which controls the signal transmission.

**18.** Wireless signal transmitter and detector (20) according to Claim 17, **characterized in that** a rewritable memory is allocated to the microcontroller, which memory has the software for controlling the microcontroller.

**19.** Wireless signal transmitter and detector (20) according to Claim 18, **characterized in that** means are provided which allow writing to the memory by means of a signal transmitted by the signal transmitter.

**20.** Wireless signal transmitter and detector (20) according to one of Claims 1 to 16, **characterized in that** the signal transmitter has a hard-wired logic, preferably an ASIC, which controls the signal transmission.

**21.** Wireless signal transmitter and detector (20) according to one of the preceding claims, **characterized in that** it is only used for installation but not for mounting on existing installed electrical switches or key switches.

## Revendications

**1.** Transmetteur et détecteur de signaux sans fil (20) destiné à une installation ultérieure dans des commutateurs ou des boutons électriques ou à un montage sur des commutateurs ou des boutons électriques déjà en place, de préférence des commutateurs d'éclairage ou des boutons d'éclairage, avec tout au moins un contact de puissance qui y est raccordé, présentant un transmetteur de signaux (29) et un détecteur de signaux (30), où le transmetteur et détecteur de signaux sans fil (20) est conçu de telle sorte qu'il détecte, à l'état encastré ou monté, une commutation ou une pression de touche ou une position de commutation du commutateur ou du bouton électrique et transmet un signal correspondant, et où le transmetteur et détecteur de signaux sans fil (20) est électriquement indépendant du circuit électrique du contact de puissance connecté ou du contact de puissance connecté, **caractérisé en ce que** le transmetteur et détecteur de signaux sans fil (20) présente une batterie (1) destinée à son alimentation en énergie, **en ce que** le détecteur de signaux (30) présente une jonction mécanique avec un levier à bascule (17) du commutateur ou du bouton, **en ce que** le détecteur de signaux (30) présente un élément détecteur (4), lequel reconnaît le mouvement du levier à bascule (17) provoqué par l'actionnement du commutateur ou du bouton, et **caractérisé en ce que** le transmetteur et détecteur de signaux (20) présente en outre un circuit de diagnostic (3) et un commutateur de batterie (2) destinés à l'activation de l'alimentation par la batterie du transmetteur de signaux, où l'élément détecteur (4) pilote le circuit de diagnostic (3), lors de l'actionnement du commutateur ou du bouton, de telle sorte que le circuit de diagnostic (3) commande le commutateur de batterie (2) de telle sorte que ce dernier active ensuite l'alimentation en énergie depuis la batterie (1) jusqu'au transmetteur de signaux.

**2.** Transmetteur et détecteur de signaux sans fil (20) selon la revendication 1, **caractérisé en ce que** le détecteur de signaux (20) présente uniquement une jonction mécanique avec un levier à bascule (17) du commutateur ou du bouton.

**3.** Transmetteur et détecteur de signaux sans fil (20) selon la revendication 1 ou 2, **caractérisé en ce que** le transmetteur et détecteur de signaux (20) présente une surface autocollante (7), pourvue de préférence d'un film de protection pouvant être retiré, destinée à assurer la jonction mécanique.

**4.** Transmetteur et détecteur de signaux sans fil (20) selon l'une des revendications 1 à 3, **caractérisé en ce que** le transmetteur et détecteur de signaux (20) est conçu en vue d'un montage dans une cavité au sein du commutateur ou du bouton.

**5.** Transmetteur et détecteur de signaux sans fil (20) selon la revendication 4, **caractérisé en ce que** le transmetteur et détecteur de signaux (20) est conçu en vue d'un montage dans la cavité située entre le levier à bascule (17) et un insert de commutation (18) et **caractérisé en ce qu'**il présente une épaisseur maximale de 5 mm, de préférence de 3 mm au plus.

**6.** Transmetteur et détecteur de signaux sans fil (20) selon l'une des revendications précédentes, **caractérisé en ce qu'**un capteur fonctionnant de manière piézoélectrique est prévu en tant qu'élément détecteur (4).

**7.** Transmetteur et détecteur de signaux sans fil (20) selon la revendication 6, **caractérisé en ce qu'**un film piézoélectrique (9) est prévu en tant que capteur fonctionnant de manière piézoélectrique.

8. Transmetteur et détecteur de signaux sans fil (20) selon la revendication 6, **caractérisé en ce qu'**une céramique piézoélectrique est prévue en tant que capteur fonctionnant de manière piézoélectrique.

9. Transmetteur et détecteur de signaux sans fil (20) selon l'une des revendications 1 à 5, **caractérisé en ce qu'**un capteur micromécanique (40) est prévu en tant qu'élément détecteur.

10. Transmetteur et détecteur de signaux sans fil (20) selon l'une des revendications 1 à 5, **caractérisé en ce qu'**un capteur magnétique est prévu en tant qu'élément détecteur (4), lequel capteur présente une bobine et un aimant permanent.

11. Transmetteur et détecteur de signaux sans fil (20) selon l'une des revendications 1 à 5, **caractérisé en ce qu'**un détecteur de proximité est prévu en tant qu'élément détecteur (4), lequel détecteur de proximité fonctionne selon un principe capacitif.

12. Transmetteur et détecteur de signaux sans fil (20) selon l'une des revendications précédentes, **caractérisé en ce qu'**un détecteur de position est prévu en tant que détecteur de signaux (30).

13. Transmetteur et détecteur de signaux sans fil (20) selon la revendication 12, **caractérisé en ce qu'**un commutateur à inclinaison (S1) est prévu en tant que détecteur de position.

14. Transmetteur et détecteur de signaux sans fil (20) selon l'une des revendications précédentes, **caractérisé en ce que** l'activation de l'alimentation en énergie a lieu pour une durée déterminée.

15. Transmetteur et détecteur de signaux sans fil (20) selon la revendication 14, **caractérisé en ce que** la durée d'activation de l'alimentation en énergie est mesurée de telle sorte que le transmetteur de signaux peut émettre, pendant ce temps, le signal correspondant à la commutation ou à la pression de touche ou à la position de commutation.

16. Transmetteur et détecteur de signaux sans fil (20) selon l'une des revendications 1 à 13, **caractérisé en ce que** l'activation de l'alimentation en énergie est interrompue par le transmetteur de signaux, après la transmission du signal correspondant à la commutation ou à la pression de touche ou à la position de commutation.

17. Transmetteur et détecteur de signaux sans fil (20) selon l'une des revendications précédentes, **caractérisé en ce que** le transmetteur de signaux présente un microcontrôleur qui commande la transmission du signal.

18. Transmetteur et détecteur de signaux sans fil (20) selon la revendication 17, **caractérisé en ce qu'**une mémoire réinscriptible est associée au microcontrôleur, laquelle mémoire est équipée du logiciel destiné à la commande du microcontrôleur.

19. Transmetteur et détecteur de signaux sans fil (20) selon la revendication 18, **caractérisé en ce que** des moyens sont prévus, lesquels permettent une description de la mémoire au moyen d'un signal transmis par l'intermédiaire du transmetteur de signaux.

20. Transmetteur et détecteur de signaux sans fil (20) selon l'une des revendications 1 à 16, **caractérisé en ce que** le transmetteur de signaux présente une logique câblée, de préférence un ASIC, laquelle commande la transmission du signal.

21. Transmetteur et détecteur de signaux sans fil (20) selon l'une des revendications précédentes, **caractérisé en ce que** ledit transmetteur et détecteur de signaux sans fil sert uniquement à une installation dans des commutateurs ou des boutons électriques, mais pas à un montage sur des commutateurs ou des boutons électriques déjà en place.

# FIG. 1 A

## FIG. 1B

# FIG. 1C

## FIG. 1D

49

20

# Fig.1e

FIG. 2

# FIG. 3

z.B.
Richtung
der
Betätigung

Sensor

# FIG. 4

# FIG. 5

# FIG. 6

FIG. 7

# FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29712270 U1